# EUROPEAN PATENT APPLICATION

(11) **EP 4 764 991 A1**
(43) Date of publication of application: **24.06.2026**
(21) Application number: 24222821.1
(22) Date of filing: 23.12.2024
(51) Int. Cl.: G06Q 10/20

(54) **DETERMINATION OF THE AGING STATUS OF ARTIFICIAL TURF**

(71) Applicant: Polytex Sportbeläge Produktions-GmbH, 47929 Grefrath (DE)
(72) Inventor: HAMANN, Sven, 45472 Mühlheim (DE); ONDRUS, ROBERT, 89075 Ulm (DE); SICK, Stephan, 76534 Baden-Baden (DE); GROCHLA, Dario, 44869 Bochum (DE); VAN DEN BERG, THORSTEN, 45145 Essen (DE)
(74) Representative: Richardt Patentanwälte PartG mbB

(57) **Abstract**

Disclosed herein is a method of determining an aging status (126) of an artificial turf (502). The artificial turf is located at a geographic location. The method comprises receiving (200) time-series data (124) descriptive of environmental conditions at the geographic location. The method further comprises receiving (202) the aging status in response to inputting the time-series data into a trained neural network (122). The method further comprises providing (204) the aging status.

## Description

### FIELD OF THE INVENTION

The invention relates to artificial turf and the maintenance of artificial turf.

### BACKGROUND

Artificial turf is a manufactured product which may be used to replace grass. The structure of the artificial turf is designed such that the artificial turf has an appearance which resembles grass. Typically, artificial turf is used as a surface for sports such as soccer, American football, rugby, tennis, golf, for playing fields, or exercise fields. Furthermore, artificial turf is frequently used for landscaping applications.

### SUMMARY OF THE INVENTION

The invention provides for a method of determining an aging status of an artificial turf, a computer program, and a turf monitoring system in the independent claims. Embodiments are given in the dependent claims.

In one aspect a method of determining an aging status of an artificial turf is disclosed. The artificial turf is located at a geographical location. The method comprises receiving time-series data descriptive of environmental conditions at the geographic location. The method further comprises receiving the aging status in response to inputting the time-series data into a trained neural network. The method further comprises providing the aging status.

In another aspect, a computer program is disclosed. The computer program comprises a computer-readable storage medium having machine-executable instructions embodied therewith. The machine-executable instructions are configured to cause a computational system to receive time-series data descriptive of environmental conditions at a geographic location of an artificial turf. The execution of the machine-executable instructions are further configured to cause a computational system to receive an aging status descriptive of the artificial turf in response to inputting the time-series data into a trained neural network. The machine-executable instructions are further configured to cause a computational system to provide the aging status.

In another aspect, a turf monitoring system is disclosed. The turf monitoring system comprises a memory storing (for example on premises or cloud based) machine-executable instructions and a trained neural network. The turf monitoring system further comprises a computational system. The execution of the machine-executable instructions causes the computational system to receive time-series data descriptive of environmental conditions at a geographic location of an artificial turf. Execution of the machine-executable instructions further causes the computational system to receive an aging status descriptive of the artificial turf in response to inputting the time-series data into a trained neural network. Execution of the machine-executable instructions further causes the computational system to provide the aging status.

### BRIEF DESCRIPTION OF THE DRAWINGS

In the following, examples are described in greater detail making reference to the drawings in which:
Fig. 1 illustrates an example of a turf monitoring system.
Fig. 2 shows a flow chart which illustrates a method of operating the turf monitoring system of Fig. 1
Fig. 3 illustrates a further example of a turf monitoring system.
Fig. 4 shows a flow chart which illustrates a method of operating the turf monitoring system of Fig. 3.
Fig. 5 illustrates a cloud computing based example of a turf monitoring system.

### DETAILED DESCRIPTION

In the following, similar elements are denoted by the same reference numerals.

In an example, there is a method of determining an aging status of an artificial turf. The artificial turf is located at a geographic location. The aging status may be a classification or numerical value assigned to a piece or portion of artificial turf to indicate either how much wear and tear the artificial turf has experienced or to express its remaining useful lifetime before it needs to be replaced. The artificial turf could for example be an athletic or other field which is manufactured from the artificial turf. The geographic location is the particular position where this artificial turf, such as a sport field, is located.

The method comprises receiving time-series data descriptive of environmental conditions at the geographic location. The time-series data could be data which is recorded or acquired periodically and describes either the instantaneous or average environmental conditions at the geographic location. This may include such things as the amount of precipitation, the amount of sunlight, temperature, and other data which would describe the environmental influences on the particular state or wearing of the artificial turf.

The time-series data may take different forms and periodicities in different examples. In one example the time-series data is provided at regular time intervals such as hourly, multiple times per day, every day, weekly, or even monthly. The environmental conditions could be average or extreme values within the time interval, particularly for the longer time intervals between entries. For example, the average temperature or other conditions could be averaged since the previous entry of the time-series data.

The method further comprises receiving the aging status in response to inputting the time-series data into a trained neural network. For example, the trained neural network could be trained by using training data that is constructed from training time-series data and known or assigned aging status corresponding to this data. For example, a deep learning type algorithm could be used for training the trained neural network.

In some examples the trained neural network is specific to a particular formulation or type of artificial turf. In this case, the trained neural network would just take the time-series data and then output the aging status. In other examples, there may be additional metadata or data which may be used to specify the type or manufacturing conditions of the artificial turf. In this case, in addition to the time-series data, there may be this additional turf metadata or other data which is also input when receiving the aging status. Having a trained neural network that is specific to a particular artificial turf may nonetheless be efficient when changing to other types of turf. For example, if a trained neural network has been trained for one particular formulation or type of artificial turf, it could then be retrained using data from a second or different type of artificial turf.

The method further comprises providing the aging status. The providing of the aging status may take different forms in different examples. For example, in one case the aging status may be provided for example to an application or app on a computer or mobile telecommunication device such as a smartphone. In other cases, the aging status may be used to trigger automated procedures such as ordering replacement supplies of artificial turf or triggering an inspection by an automated system such as a drone or wheeled robot.

The trained neural network could, in one example, be implemented using a recurrent neural network (RNN) designed for predicting artificial turf aging status takes time-series data representing environmental conditions-such as temperature, UV exposure, precipitation, and usage patterns-as input and generates an output a turf aging status that is descriptive of the artificial turf's current and/or projected aging status. An RNN is particularly applicable because its architecture enables the RNN to model temporal dependencies and trends in the data, allowing it to capture how recurring environmental factors influence the turf's degradation over time. The model processes sequential data in a way that reflects the cumulative impact of past conditions on the turf's aging process. As a recurrent model, it supports incremental updates: additional data points can be fed into the network as they become available, enabling continuous refinement of predictions without the need to retrain the model from scratch. This adaptive capability makes it a robust tool for long-term predictive maintenance and lifecycle analysis of artificial turf.

Several types of recurrent neural networks (RNNs) may be applicable, these may include vanilla RNNs, Long Short-Term Memory networks (LSTMs), and Gated Recurrent Units (GRUs). Vanilla RNNs are simpler and can handle basic sequential patterns but may struggle with long-term dependencies due to vanishing gradients. LSTMs and GRUs address this issue by incorporating gates that regulate the flow of information, making them more effective for capturing long-term temporal dependencies in time-series data. To train the network, one may use a labeled dataset containing sequences of environmental condition data paired with corresponding turf aging statuses. The training process involves splitting the dataset into training, validation, and test sets, then using backpropagation through time (BPTT) to minimize a loss function (e.g., mean squared error or categorical cross-entropy, depending on the output type). Regularization techniques such as dropout and early stopping can help prevent overfitting, while optimizers like Adam can ensure efficient convergence. For continuous learning, the model can be periodically fine-tuned with new data to improve accuracy over time.

An alternative to an RNN for predicting artificial turf aging is a simple neural network (NN) with fully connected layers, often referred to as a feedforward neural network. This approach processes input data as static features rather than sequences, meaning time-series data could be preprocessed into a fixed-size format, such as summary statistics (e.g., averages, extremes, trends) or engineered features representing temporal patterns. Fully connected layers allow the network to learn complex relationships between the input features and the turf's aging status. While this approach lacks the ability to model temporal dependencies directly, it can still be effective for capturing non-linear patterns in the time-series data.

To train a feedforward NN, one could prepare a dataset by transforming time-series data into structured inputs for each instance, ensuring meaningful features are extracted. The network could then be trained using supervised learning, where labeled data pairs of input features and corresponding turf aging outputs are used to minimize a loss function (e.g., mean squared error for regression or cross-entropy for classification). Fully connected NNs can be enhanced with regularization techniques like L2 regularization or dropout to prevent overfitting. Other types of NNs applicable to this problem include deep feedforward networks, which use additional hidden layers for increased representational power, or hybrid models that combine feature engineering with convolutional layers to capture local patterns before passing data through fully connected layers.

In some cases, the aging status is a status which is descriptive of a current aging status or state of the artificial turf. In other examples, the aging status could be a prediction about the aging status of the artificial turf in the future. For example, in some cases the aging status may be an estimate of the remaining useful lifetime of the artificial turf. In this case then the aging status could be used to determine or trigger when to replace the artificial turf.

In another example, the method further comprises receiving turf maintenance instructions in response to querying the instruction database with the aging status. In some cases, querying the instruction database may also include including in the query turf metadata or data descriptive of the type or manufacture of the artificial turf. The method further comprises providing the turf maintenance instructions. The turf maintenance instructions may for example provide detailed instructions which a maintenance robot or maintenance personnel could follow to maintain the artificial turf or provide preventative maintenance to increase the active lifespan of the artificial turf.

In another example the time-series data is at least partially received from a remote weather service. For example, in many jurisdictions the weather for a particular city or village or location may be provided. In some instances the average weather for a region may be enough to provide accurate time-series data.

In another example, the time-series data is at least partially received from an on-site weather station located at the geographic location. For example, if the artificial turf is in an athletic field there may be an on-site weather station located adjacent to the artificial turf. This may be advantageous because it may provide for a more accurate time-series data and therefore a more accurate aging status.

In another example, the method further comprises receiving turf metadata descriptive of the artificial turf at the geographic location. The turf metadata is additionally input into the trained neural network to receive the aging status. This example has the advantage that the trained neural network is more flexible instead of being limited to, for example, a particular type or formulation of artificial turf, the turf metadata can be used to train the trained neural network and control it so that it may work with multiple types or formulations of artificial turf. In some examples, this may have the benefit that even if a particular formulation or artificial turf has not been trained with the proper specification of the turf metadata it may nonetheless enable an aging status to be determined for this particular piece or section of artificial turf.

In another example, the turf metadata comprises manufacturing data for the artificial turf. The manufacturing data may comprise such things as the type of backing layer, the type of substrate, the type of artificial turf fibers as well as any coatings or formulations, and also such things as the type of infill. For example, various types of turf infill may store or retain moisture differently. This may in some instances have an effect on the aging status of the artificial turf.

Returning to the example where the trained neural network is a recurrent neural network, the type of data which can be fed into the recurrent neural network can be adjusted by the particular example. For example, in addition to environmental data, the time-series data could be expanded to include details about the specific artificial turf. Meta data which is descriptive of such things as the materials used, the style or type of artificial turf, the process parameters used in manufacturing the artificial turf, and/or a turf quality metric could be included in the time-series data fed into the recurrent neural network. To incorporate the additional data, the recurrent neural network would have its input layer adapted to receive the additional data and during training labeled dataset would include the additional metadata.

In another example, the manufacturing data comprises process control data from the manufacturer of the artificial turf. For example, there may be various settings and controls and specifications used during the manufacture of the artificial turf. In some examples this could be included in the metadata that is used for controlling the trained neural network.

In another example, the manufacturing data further comprises a turf quality metric data. The turf quality metric data may for example be a classification or a numerical value which is assigned to the entire artificial turf or a portion of the artificial turf which may be used to describe the quality of the artificial turf. This may for example be an optical classification performed by a human or a neural network to assign or identify manufacturing defects in the artificial turf. In some instances, if a neural network is used the turf quality metric may be a probability or likelihood output by a neural network that there is a presence of a particular manufacturing defect of the artificial turf.

In another example, the trained neural network is any one of the following: a feedforward neural network, a neural network comprising the multiple fully connected layers, and a recurrent neural network. This example may be advantageous because all of these types of neural network may be useful in constructing a trained neural network that is effectively able to provide the aging status. The neural network comprising the multiple fully connected layers may for example have enough input to encode the time-series data. The fully connected neural networks with the fully connected layers are able to model a larger variety of non-linear functions and may provide an accurate estimate of the aging status.

In another example, the aging status comprises a current aging status of the artificial turf. This may for example be useful in assessing current maintenance and replacement needs.

In another example, the aging status comprises a predicted artificial turf remaining life. This example may be particularly advantageous because it may provide a means of not only estimating when the artificial turf should be replaced, but also may enable more focused preventative maintenance to be performed on the artificial turf.

In another example, the method further comprises acquiring spatially dependent optical data using an optical inspection system. The optical inspection system may for example be cameras that are used to image portions of the artificial turf. The method further comprises receiving a spatially dependent wear condition of the artificial turf in response to inputting the spatially dependent optical data into the image classification neural network. For example, if the optical inspection is a camera, it may measure such things as the color, the brightness or reflectivity, and the grain orientation of the artificial turf. This information, coupled with a knowledge of the original artificial turf that was installed, may be useful in estimating the wear condition or how worn the artificial turf is.

The method further comprises augmenting the time-series data with the spatially dependent wear condition. For example, as was detailed for the metadata, the trained neural network may be configured to additionally receive this spatially dependent wear condition.

The method further comprises receiving updated aging status of the artificial turf in response to inputting the augmented time-series data into the trained neural network and then providing the updated aging status. This example may be beneficial because, in addition to just providing an estimate due to environmental conditions, the spatially dependent optical data is used to directly measure how worn the artificial turf is. In conjunction with the environmental data this may for example provide a very accurate estimate of the remaining lifespan of the artificial turf.

In another example, the method further comprises triggering the acquisition of the spatially dependent optical data if the aging status meets a predetermined criterion. For example, if a wheeled robot or a drone is used to provide the optical inspection system this may be costly and this may not be necessary if the artificial turf is new or in a particularly good condition. If for example the aging status indicates that there may be a reduced lifespan or that the amount of aging of the artificial turf is serious, then this can be used to then automatically trigger the acquisition of the spatially dependent optical data. In some cases, if there are cameras fixed around the artificial turf, this may then trigger the acquisition of data. In the case where there is a robot or drone, this may then be automatically ordered to perform the measurements.

In another example, the optical inspection system comprises a system of fixed cameras configured to image the artificial turf. As cameras are relatively inexpensive one may for example mount cameras at different locations surrounding the artificial turf or athletic field. This may provide, for example, an extremely cost effective yet effective means of determining the aging status more accurately.

In another example, the optical inspection system comprises a wheeled robot or a drone. Both the wheeled robot and the drone may be advantageous because it is not necessary to have cameras installed all of the time. As was mentioned above, the optical inspection can be ordered on the fly or when it is determined that the artificial turf may be nearing its end of lifetime.

In another example, the optical inspection system is configured for imaging regions of the artificial turf from multiple directions. This could be implemented in different ways, for example if there are fixed cameras the cameras may be arranged such that there is overlap and various sections of the artificial turf are then imaged from different directions. If a drone is used the drone may be flown and then particular regions of the artificial turf imaged from different directions.

If the optical inspection system comprises a wheeled robot, there are also a number of options for imaging the same region twice. For example, the wheeled robot could have a camera tilted at an angle and then roll over a position from one direction and acquire optical data and then again approach the same region and image it from a different direction. In other examples the wheeled robot may have two cameras, for example tilted at a first angle at the front of the wheeled robot and then tilted at a different angle at the rear end of the wheeled robot.

In the case of a drone, the drone may for example fly around in a pattern and acquire optical data from one direction and then approach the same location from a different location thereby acquiring optical data from multiple directions.

The image classification neural network may be implemented in different ways. In one case, the image classification neural network is a convolutional neural network that is connected to a number of fully connected layers and an output layer that functions as a classifier. In a further example, the image classification neural network is a U-Net that is connected to a classifier. The image classification neural network may be able to assign an image or multiple images of the same location of artificial turf to a classification which represents different spatially dependent wear conditions, or the image classification neural network may be configured to output a numerical value which represents the spatially dependent wear condition. The image classification neural network can be trained by providing images of artificial turf which are labeled with the spatially dependent wear condition. This may then be used in a deep learning type algorithm to train the image classification neural network.

In another example, the optical inspection system comprises an ambient light sensor. The method further comprises receiving ambient light data from the ambient light sensor and then appending the ambient light data to the spatially dependent optical data before inputting the spatially dependent optical data into the image classification neural network. This may be beneficial because the ambient light may affect color measurements and also the reflectivity measurements determined by the image classification neural network. Including the use of an ambient light sensor may make the determination of the spatially dependent wear condition much more accurate.

The ambient light sensor may for example be implemented in different ways. For example, a photodiode may be used with a reflector or diffuser above it to measure the overall amount of light. In some cases a diffuser may be mounted above an RGB camera which may be used to also measure, in addition to the intensity, also the color of the light that is ambient.

In another example the method further comprises monitoring spatially dependent turf usage data using an optical turf usage detection system. For example, there may be a number of cameras which are mounted around the artificial turf or athletic field. Convolutional neural networks can be used to localize where players or people are running or using the artificial turf. The spatially dependent turf usage data may therefore be an indication of how much time people or players have spent in different locations on the artificial turf. This for example could be used to produce a heat map which indicates which regions of the artificial turf are more used. The method further comprises appending the spatially dependent field turf usage data to the time-series data before inputting the time-series data into the trained neural network. This actually may be very useful because, in addition to providing environmental data, the measured data which is related to the actual turf usage is also input. This may provide for a more accurate estimate or prediction of the aging status.

In another example, there is a turf monitoring system. The turf monitoring system comprises a memory storing machine-executable instructions and the trained neural network. The turf monitoring system further comprises a computational system. Execution of the machine-executable instructions causes the computational system to receive time-series data descriptive of environmental conditions at a geographic location of the artificial turf. Execution of the machine-executable instructions further causes the computational system to receive an aging status that is descriptive of the artificial turf in response to inputting the time-series data into a trained neural network. Execution of the machine-executable instructions further causes the computational system to provide the aging status.

In another example, the turf monitoring system further comprises a mobile telecommunication device such as a smartphone or tablet. Execution of the machine-executable instructions further causes the computational system to provide the aging status by transferring the aging status to the mobile telecommunication device. The mobile telecommunication device is configured to display the aging status. This may be advantageous because it for example may provide a means for a caretaker of the artificial turf to remotely access and use the aging status at the location of the artificial turf.

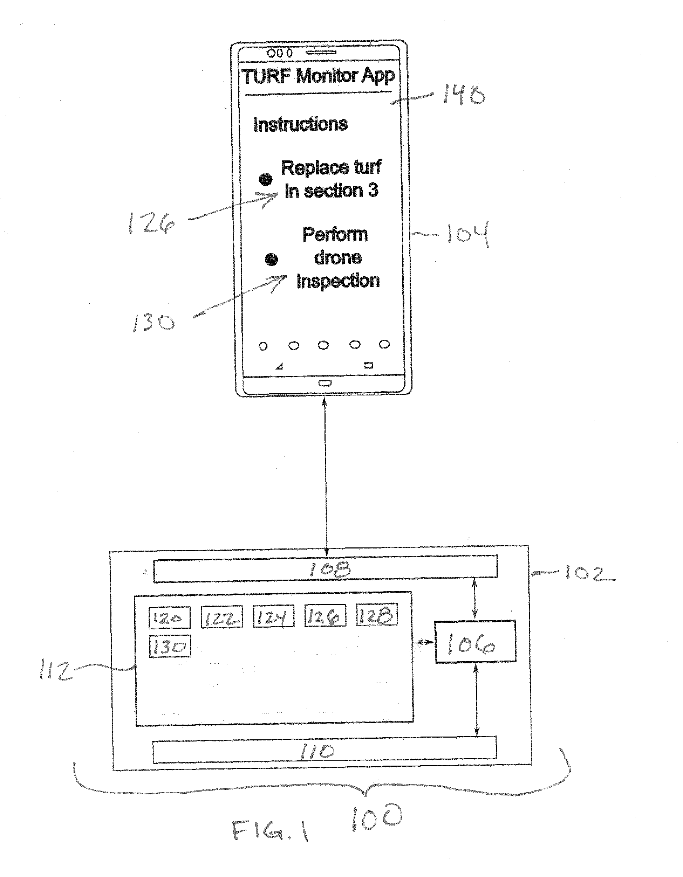

Fig. 1 illustrates an example of a turf monitoring system 100. The turf monitoring system 100 is shown as comprising a computer 102 and optionally, a mobile telecommunication device 104. The computer 102 is intended to represent one or more computers or computing devices which may be located at one or more locations. It may for example be located at the same or near to the geographic location where the artificial turf is or it may be at a different location. For example, it may be a remote server or virtual machine located in a cloud-based system.

The computer 102 is shown as comprising a computational system 106 that is intended to represent one or more computational systems or computing cores located at one or more locations. The computational system 106 is shown as being connected to an optional network interface 108 and optional user interface 110. The network interface 108 enables the computational system 106 to communicate with other components of the turf monitoring system 100 as well as exchange data with remote computers and systems. The user interface 110 may enable the user or operator to operate and control the turf monitoring system 100. The computational system 106 is further connected to a memory 112. The memory 112 is intended to represent various types of memory which are accessible to the computational system 106. For example, the memory 112 could be a non-transitory storage medium.

The memory 112 is shown as containing machine-executable instructions 120 which enable the computational system 106 to interact with and control other components of the turf monitoring system 100 as well as perform numerical and data processing tasks. The memory 112 is further shown as containing a trained neural network. The trained neural network has been trained to receive time-series data as input and to output an aging status in response. The memory 112 is further shown as storing time-series data 124 that is descriptive of environmental conditions at the same location that the artificial turf is located. The memory 112 is further shown as containing the aging status 126 that was received in response to inputting the time-series data 124 into the trained neural network 122.

The memory 112 is further shown as containing an optional instruction database 128. The optional instruction database 128 may for example be queried with the aging status 126 which then returns turf maintenance instructions 130. These for example may be detailed instructions or commands which may be used to control another device such as a robot or instructions which are provided to a human operator to perform some specific task.

The mobile telecommunication device 104 is shown as being optionally connected to the network interface 108. The mobile telecommunication device 104 comprises a user interface which may be used to provide access to a user interface, app or application. In this case, there is a first message which provides an aging status 126, in this example, as an indication that a section of the turf should be replaced. In other cases, this could for example be an estimate of when the turf should be repaired or replaced or a numerical value indicating its aging status 126. The user interface of the app 140 also displays a turf maintenance instruction 130. In this case, there is an instruction to perform a drone inspection. Instead of displaying this on the user interface 140 for a human to interpret, this could also be an automatic command which causes a wheeled robot or flying drone to go and visually inspect the artificial turf.

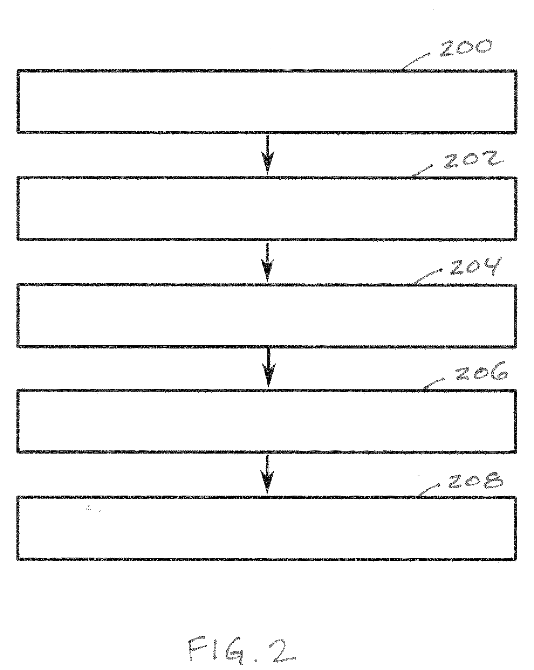

Fig. 2 shows a flowchart which illustrates a method of operating the turf monitoring system 100 of Fig. 1. In step 200, the time-series data 124 is received. The time-series data 124 is descriptive of environmental conditions at a geographic location of an artificial turf. In step 202, the aging status 126 is received in response to inputting the time-series data 124 into a trained neural network 122. In step 204, the aging status 126 is provided. For example, it may be provided to another machine or used to control the operation of a robot. Steps 206 and 208 are optional. In step 206, the turf maintenance instructions 130 are received in response to querying the instruction database 128. In step 208, the turf maintenance instructions 130 are provided. For example, they are used to control the behavior of the mobile telecommunication device 104 as is illustrated in Fig. 1.

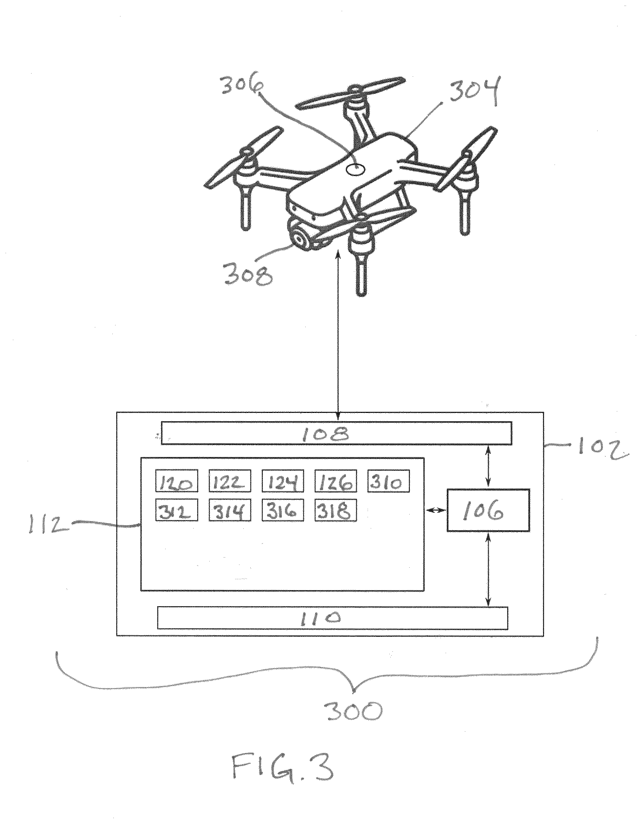

Fig. 3 illustrates a further example of a turf monitoring system 300. The turf monitoring system 300 is similar to the turf monitoring system 100 depicted in Fig. 1. The features of the turf monitoring system 100 and the turf monitoring system 300 may be combined. In Fig. 3, the turf monitoring system 300 comprises additionally an optical inspection system 304. In this case it is a drone 304. The drone 304 comprises a camera 308 and an optional ambient light sensor 306. In the example illustrated in Fig. 3, the aging status 126 triggers the use of a drone 304. The memory 112 is shown as storing a predetermined criterion 302. This for example may be a particular aging status or statuses which indicate that the artificial turf may be nearing the end of its lifetime. This then causes a drone 304 to be deployed.

The memory 112 is shown as storing spatially dependent optical data 310 that was acquired by the drone 304 flying over the artificial turf and acquiring images. In some cases, the spatially dependent optical data 310 may image identical regions from different angles. The memory 112 is also shown as storing optional ambient light data 312. This may be useful for providing more details on the color and brightness measurements on the artificial turf. The memory 112 is further shown as containing an image classification neural network 314. One or more spatially dependent optical data 310 or images are input into this neural network 314 and the spatially dependent wear condition 316 is output. The drone 304 may for example use GPS to determine the location of the drone and also the location of the spatially dependent optical data 310. In other cases there may be radio transponders distributed about the artificial turf to provide tracking data.

The image classification neural network 314 then provides a spatially dependent wear condition 316 in response to receiving the spatially dependent optical data 310. The spatially dependent wear condition 316 is appended to the time-series data 124 and this is used to obtain an updated aging status 318.

In the case that the spatially dependent wear condition 316 is being used, then the trained neural network 122 would also have additional input and be trained to use this data also. For example, the spatially dependent wear condition 316 in conjunction with training time-series data 124 could be input and then compared to a known or labeled aging status 126 and again, a deep learning technique could be used for training the trained neural network 122.

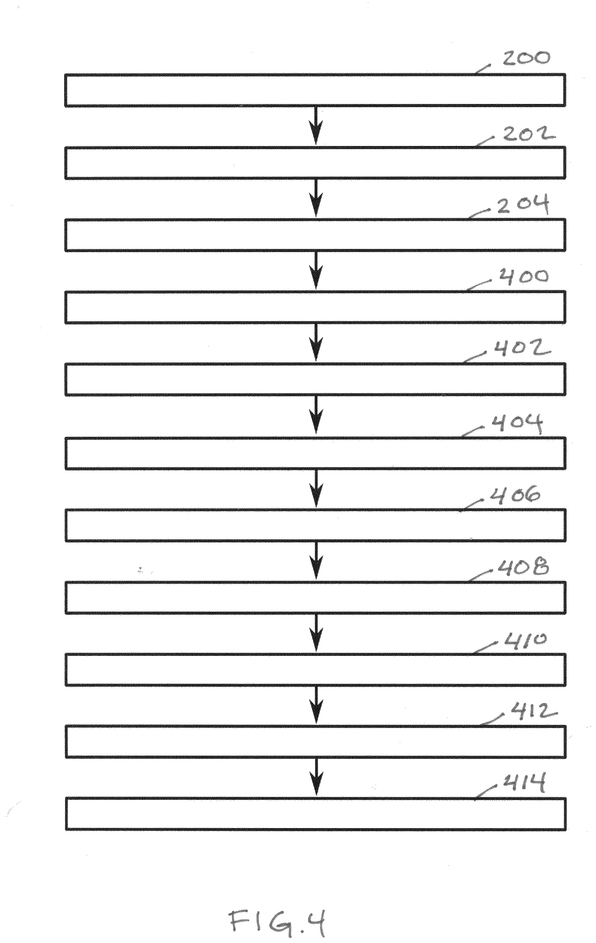

Fig. 4 shows a flowchart which illustrates a method of operating the turf monitoring system 300 of Fig. 3. Steps 200, 202, and 204 are performed as was illustrated in Fig. 2. In step 400, the acquisition of the spatially dependent optical data 310 is triggered if the aging status 126 meets the predetermined criterion 302. In step 402, the spatially dependent optical data 310 is acquired using the optical inspection system or the drone 304. In optional step 404, the ambient light data 312 is received from the ambient light sensor 306 as the spatially dependent optical data 310 is received. In optional step 406, the ambient light data 312 is appended to the spatially dependent optical data 310 before inputting the spatially dependent optical data 310 into the image classification neural network 314. In step 408, the spatially dependent wear condition 316 is received in response to inputting the spatially dependent optical data 310 into the image classification neural network 314. In step 410, the time-series data 124 is augmented with the spatially dependent wear condition 316. In step 412, the updated aging status 318 is received in response to inputting the augmented time-series data 124 into the trained neural network 122. In step 414, the updated aging status is provided.

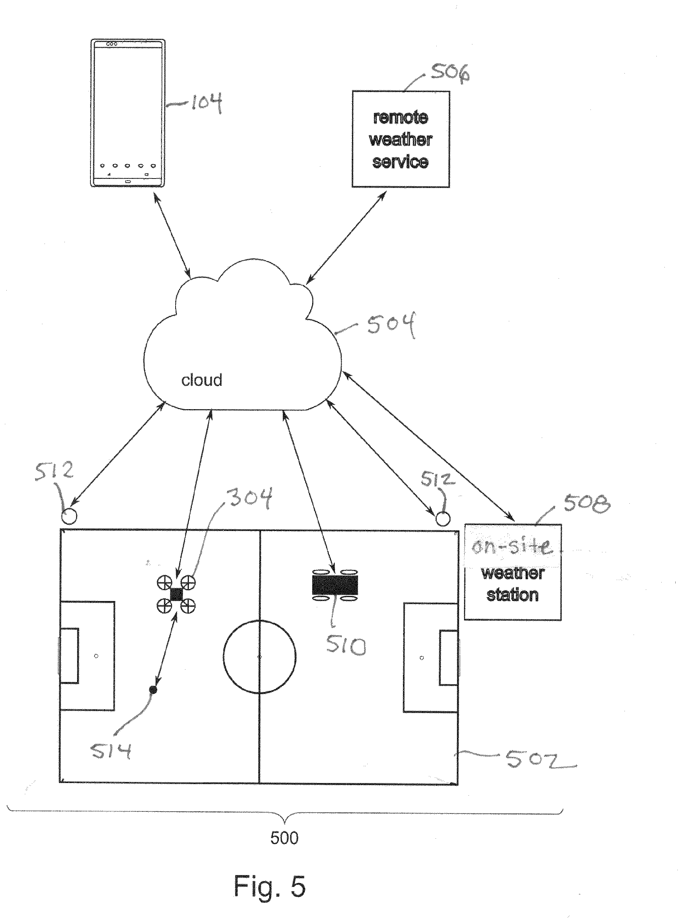

Fig. 5 illustrates a further example of a turf monitoring system that is configured for monitoring the artificial turf 502. In this example, the artificial turf 502 is a soccer field. In Figs. 1 and 3 there was a computer 102. In this example a cloud-based system 504 is used for handling the computational tasks illustrated in Figs. 1 and 3. The cloud-based system is shown as being able to collect the time-series data 124 from a remote weather service 506 or an on-site weather station 508. The remote weather service 506 may for example be a weather service provided by a local region or government on a regular basis. For example, it may use or provide weather reports. The on-site weather station 508 may have meteorological instruments such as temperature, humidity, precipitation and possibly sunlight measurements adjacent to or in close proximity to the artificial turf 502. The on-site weather station 508 may provide very detailed information about the environmental conditions that the artificial turf 502 is exposed to.

Also, there is additionally, an RFID chip 514 that is configured to measure at least part of the time-series data 124 also. The RFID chip 514 may for example provide data to the on-site weather station 508 or it may also communicate with a drone 304 or a wheeled robot 510 if those are used on the artificial turf 502.

To obtain the spatially dependent optical data 310 Fig. 5 illustrates several options. The drone 304 may fly over the artificial turf 502 and acquire images which may be used for the spatially dependent optical data 310. In addition to or as an alternative, there is also a wheeled robot 510 that may for example drive over the surface of the artificial turf 502 and acquire images with one or more cameras mounted on the surface of the wheeled robot 510. In yet a further example, there may be multiple fixed cameras 512 that are positioned possibly on light fixtures or posts around the artificial turf 502. As cameras are now relatively inexpensive it may be possible to mount multiple fixed cameras 512 in various positions and, in some cases, eliminate the need for the drone 304 or the wheeled robot 510.

While the invention has been illustrated and described in detail in the drawings and foregoing description, such illustration and description are to be considered illustrative or exemplary and not restrictive; the invention is not limited to the disclosed examples.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Various examples may possibly be described by one or more of the following features in the following numbered clauses:
Clause 1. A method of determining an aging status (126) of an artificial turf (502), wherein the artificial turf is located at a geographic location, wherein the method comprises:
   - receiving (200) time-series data (124) descriptive of environmental conditions at the geographic location; and
   - receiving (202) the aging status in response to inputting the time-series data into a trained neural network (122); and
   - providing (204) the aging status.
Clause 2. The method of clause 1, further comprising:
   - receiving (206) turf maintenance instructions (130) in response to querying an instruction database (128) with the aging status; and
   - providing (208) the turf maintenance instructions.
Clause 3. The method of clause 1 or 2, wherein the time-series data is at least partially received from a remote weather service (506).
Clause 4. The method of clause 1, 2, or 3, wherein the time-series data is at least partially received from an on-site weather station (508) located at the geographic location.
Clause 5. The method of clause 4, wherein the on-site weather station comprises at least one RFID chip (514) configured for measuring at least a portion of the time-series data.
Clause 6. The method of any one of the preceding clauses, wherein the method further comprises receiving turf metadata descriptive of the artificial turf at the geographic location, wherein the turf metadata is additionally input into the trained neural network to receive the aging status.
Clause 7. The method of clause 6, wherein the turf metadata comprises manufacturing data for the artificial turf, wherein the manufacturing data preferably comprises process control data from the manufacture of the artificial turf and/or turf quality metric data.
Clause 8. The method of any one of the preceding clauses, wherein the trained neural network is any one of the following: a feed forward neural network, a neural network comprising multiple fully connected layers, and a recurrent neural network.
Clause 9 The method of any one of the preceding clauses, wherein the aging status comprises a current aging status of the artificial turf.
Clause 10. The method of any one of the preceding clauses, wherein the aging status comprises a predicted artificial turf remaining life.
Clause 11. The method of any one of the preceding clauses, wherein the method further comprises:
   - acquiring (402) spatially dependent optical data (310) using an optical inspection system (304, 510, 512);
   - receiving (408) a spatially dependent wear condition (316) of the artificial turf in response to inputting the spatially dependent optical data into an image classification neural network (314);
   - augmenting (410) the time-series data with the spatially dependent wear condition;
   - receiving (412) updated aging status (318) of the artificial turf in response to inputting the augmented time-series data into the trained neural network; and
   - providing (414) the updated aging status.
Clause 12. The method of clause 11, wherein the method further comprises triggering (400) the acquisition of the spatially dependent optical data if the aging status meets a predetermined criterion (302).
Clause 13. The method of clause 11 or 12, wherein the optical inspection system comprises a system of fixed cameras (512) configured to image the artificial turf.
Clause 14. The method of clause 11, 12, or 13, wherein the optical inspection system comprises a wheeled robot (510) and/or comprises a drone (304).
Clause 15. The method of any one of clauses 11 through 14, wherein the optical inspection system is configured for imaging regions of the artificial turf from multiple directions.
Clause 16. The method of any one of clauses 11 through 15, wherein the optical inspection system comprises an ambient light sensor (306), wherein the method further comprises:
   - receiving (404) ambient light data (312) from the ambient light sensor; and
   - appending (406) the ambient light data to the spatially dependent optical data before inputting the spatially dependent optical data into the image classification neural network.
Clause 17. The method of any one of the preceding clause, wherein the method further comprises:
   - monitoring spatially dependent turf usage data using an optical turf usage detection system; and
   - appending the spatially dependent field turf usage data to the time-series data before inputting the time-series data into the trained neural network.
Clause 18. A computer program comprising a computer-readable storage medium (112) having machine executable instructions (120) embodied therewith, said machine executable instructions are configured to cause a computational system (106) to:
   - receive (200) time-series data (124) descriptive of environmental conditions at a geographic location of an artificial turf (502); and
   - receive (202) an aging status (126) descriptive of the artificial turf in response to inputting the time-series data into a trained neural network (122); and
   - provide (204) the aging status.
Clause 19. A turf monitoring system comprising:
   - a memory (112) storing machine executable instructions (120) and a trained neural network (122);
   - a computational system (106), wherein execution of the machine executable instructions causes the computational system to:
   - receive (200) time-series data (124) descriptive of environmental conditions at a geographic location of an artificial turf (502); and
   - receive (202) an aging status (126) descriptive of the artificial turf in response to inputting the time-series data into a trained neural network (122); and
   - provide (204) the aging status.
Clause 20. The turf monitoring system of clause 19, wherein the turf monitoring system further comprises a mobile telecommunication device (104), wherein execution of the machine executable instructions further causes the computational system to provide the aging status by transferring the aging status to the mobile telecommunications device, wherein the mobile telecommunications device is configured to display (140) the aging status.

### REFERENCE SIGNS LIST

- 100: turf monitoring system
- 102: computer
- 104: mobile telecommunications device
- 106: computational system
- 108: network interface
- 110: user interface
- 112: memory
- 120: machine executable instructions
- 122: trained neural network
- 124: time-series data
- 126: aging status
- 128: instruction database
- 130: turf maintenance instructions
- 140: user interface with app
- 200: receiving time-series data descriptive of environmental conditions at the geographic location
- 202: receiving the aging status in response to inputting the time-series data into a trained neural network
- 204: providing the aging status
- 300: turf monitoring system
- 302: predetermined criterion (for aging status)
- 304: optical inspection system (drone)
- 306: ambient light sensor
- 308: camera
- 310: spatially dependent optical data
- 312: ambient light data
- 314: image classification neural network
- 316: spatially dependent wear condition
- 318: updated aging status
- 400: triggering the acquisition of the spatially dependent optical data if the aging status meets a predetermined criterion
- 402: acquiring spatially dependent optical data using an optical inspection System
- 404: receiving ambient light data from the ambient light sensor
- 406: appending the ambient light data to the spatially dependent optical data before inputting the spatially dependent optical data into the image classification neural network
- 408: receiving a spatially dependent wear condition of the artificial turf in response to inputting the spatially dependent optical data into an image classification neural network
- 410: augmenting the time-series data with the spatially dependent wear condition
- 412: receiving updated aging status of the artificial turf in response to inputting the augmented time-series data into the trained neural network
- 414: providing the updated aging status
- 500: turf monitoring system
- 502: artificial turf
- 504: cloud system
- 506: remote weather service
- 508: on-site weather station
- 510: optical inspection system (wheeled robot)
- 512: optical inspection system (fixed camera)
- 514: RFID chip

## Claims

1. A method of determining an aging status (126) of an artificial turf (502), wherein the artificial turf is located at a geographic location, wherein the method comprises:
- receiving (200) time-series data (124) descriptive of environmental conditions at the geographic location; and
- receiving (202) the aging status in response to inputting the time-series data into a trained neural network (122); and
- providing (204) the aging status.

2. The method of claim 1, further comprising:
- receiving (206) turf maintenance instructions (130) in response to querying an instruction database (128) with the aging status; and
- providing (208) the turf maintenance instructions.

3. The method of claim 1 or 2, wherein the time-series data is at least partially received from any one of the following a remote weather service (506), an on-site weather station (508) located at the geographic location, and combinations thereof; and wherein the on-site weather station preferably comprises at least one RFID chip (514) configured for measuring at least a portion of the time-series data.

4. The method of any one of the preceding claims, wherein the method further comprises receiving turf metadata descriptive of the artificial turf at the geographic location, wherein the turf metadata is additionally input into the trained neural network to receive the aging status.

5. The method of claim 4, wherein the turf metadata comprises manufacturing data for the artificial turf, wherein the manufacturing data preferably comprises process control data from the manufacture of the artificial turf and/or turf quality metric data.

6. The method of any one of the preceding claims, wherein the trained neural network is any one of the following: a feed forward neural network, a neural network comprising multiple fully connected layers, and a recurrent neural network.

7. The method of any one of the preceding claims, wherein the aging status comprises a current aging status of the artificial turf and/or the aging status comprises a predicted artificial turf remaining life.

8. The method of any one of the preceding claims, wherein the method further comprises:
- acquiring (402) spatially dependent optical data (310) using an optical inspection system (304, 510, 512);
- receiving (408) a spatially dependent wear condition (316) of the artificial turf in response to inputting the spatially dependent optical data into an image classification neural network (314);
- augmenting (410) the time-series data with the spatially dependent wear condition;
- receiving (412) updated aging status (318) of the artificial turf in response to inputting the augmented time-series data into the trained neural network; and
- providing (414) the updated aging status.

9. The method of claim 8, wherein the method further comprises triggering (400) the acquisition of the spatially dependent optical data if the aging status meets a predetermined criterion (302).

10. The method of claim 8 or 9, wherein the optical inspection system comprises any one of the following: a system of fixed cameras (512) configured to image the artificial turf, a wheeled robot (510) configured to image the artificial turf, a drone (304) configured to image the artificial turf, and combinations thereof, wherein the optical inspection system is preferably configured for imaging regions of the artificial turf from multiple directions.

11. The method of any one of claims 8 through 10, wherein the optical inspection system comprises an ambient light sensor (306), wherein the method further comprises:
- receiving (404) ambient light data (312) from the ambient light sensor; and
- appending (406) the ambient light data to the spatially dependent optical data before inputting the spatially dependent optical data into the image classification neural network.

12. The method of any one of the preceding claims, wherein the method further comprises:
- monitoring spatially dependent turf usage data using an optical turf usage detection system; and
- appending the spatially dependent field turf usage data to the time-series data before inputting the time-series data into the trained neural network.

13. A computer program comprising a computer-readable storage medium (112) having machine executable instructions (120) embodied therewith, said machine executable instructions are configured to cause a computational system (106) to:
- receive (200) time-series data (124) descriptive of environmental conditions at a geographic location of an artificial turf (502); and
- receive (202) an aging status (126) descriptive of the artificial turf in response to inputting the time-series data into a trained neural network (122); and
- provide (204) the aging status.

14. A turf monitoring system comprising:
- a memory (112) storing machine executable instructions (120) and a trained neural network (122);
- a computational system (106), wherein execution of the machine executable instructions causes the computational system to:
- receive (200) time-series data (124) descriptive of environmental conditions at a geographic location of an artificial turf (502); and
- receive (202) an aging status (126) descriptive of the artificial turf in response to inputting the time-series data into a trained neural network (122); and
- provide (204) the aging status.

15. The turf monitoring system of claim 14, wherein the turf monitoring system further comprises a mobile telecommunication device (104), wherein execution of the machine executable instructions further causes the computational system to provide the aging status by transferring the aging status to the mobile telecommunications device, wherein the mobile telecommunications device is configured to display (140) the aging status.
